# EUROPEAN PATENT APPLICATION

(11) **EP 2 884 810 A1**
(43) Date of publication of application: **17.06.2015**
(21) Application number: 13197222.6
(22) Date of filing: 13.12.2013
(51) Int. Cl.: H04W 74/04, H04W 72/04, H04W 72/12

(54) **Deterministic medium access control**

(71) Applicant: Siemens Aktiengesellschaft, 80333 München (DE)
(72) Inventor: Hulbert, Anthony Peter, Bassett Green, Southampton, Hampshire SO16 3DF (GB)

(57) **Abstract**

The controlling of devices in a wireless network shall be flexible and time-efficient. Therefore, it is provided a method of controlling a plurality of devices (E) by a controller (C), each of the devices (E) being connected to a slave (WS) of a wireless network and the controller (C) being connected to a master (WM) of the wireless network, including the steps of specifying the topology of the network including the devices and the controller connected thereto, automatically determining for both uplink and downlink of each slave-master pair of the wireless network: a processing time (TP) to construct an air interface telegram for transmission, an on-air time of the air interface telegram and a processing time (RP) to recover data from a received air interface telegram, and the step of acquiring a specific transmission schedule of a control cycle on the basis of the determined time values as well as controlling of the devices (E) by the master (WM) using said specific transmission schedule. Furthermore, there is provided a corresponding system.

## Description

The present invention relates to a method of controlling a plurality of devices by a controller, each of the devices being connected to a slave of a wireless network and the controller being connected to a master of the wireless network. Furthermore, the present invention relates to a corresponding system.

Wireless radio communication links have typically been designed for applications in which modest latency is not of significant concern. However, some applications require extremely low latency that is also non-varying. One such application is wireless industrial control. Here the reliability requirement is extremely high: typical requirements for mean time between message transmission failure run to days or even weeks. Moreover, the bandwidth efficiency requirement is also high - typically >2bps/Hz. In addition to the above, highly reliable links are required in both directions.

For existing systems the Medium Access Control (MAC) layer is typically non-deterministic, introducing variable delays that are incompatible with the above requirement. Moreover, because the transmission times can vary, the protocol introduces an overhead in synchronising the radio links in time.

An alternative is to use Time Division Multiple Access (TDMA). This provides deterministic fixed delays. However, it is inflexible, typically requiring the transmission of messages that have identical size payloads for every air interface telegram.

In view of that, it is the object of the present invention to provide a method of controlling a plurality of devices which is flexible on the one hand and does not have a high overhead in synchronising.

According to the present invention, this object is solved by a method of controlling a plurality of devices by a controller, each of the devices being connected to a slave of a wireless network and the controller being connected to a master of the wireless network, including the steps of specifying the topology of the network including the devices and the controller connected thereto, automatically determining for both uplink and downlink of each slave-master pair of the wireless network a processing time to construct an air interface telegram for transmission, an on-air time of the air interface telegram and a processing time to recover data from a received air interface telegram, acquiring a specific transmission schedule of a control cycle on the basis of the determined time values and controlling of the devices by the master using said specific transmission schedule.

Furthermore, there is provided a system including a controller, a plurality of devices controlled by the controller and a wireless network, each of the devices being connected to a slave of the wireless network and the controller being connected to a master of the wireless network, wherein the controller is adapted for specifying the topology of the network including the devices and the controller connected thereto, automatically determining for both uplink and downlink of each slave-master pair of the wireless network a processing time to construct an air interface telegram for transmission, an on-air time of the air interface telegram and a processing time to recover data from a received air interface telegram, acquiring a specific transmission schedule of a control cycle on the basis of the determined time values and controlling of the devices by the master using said specific transmission schedule.

The advantage of the inventive method and system is that a so-called "deterministic MAC" is provided for an individual network. For this purpose, a specific transmission schedule of a control circuit is automatically acquired for a pre-given network being used for controlling devices by a controller. Thus, the transmission schedule is tailored for the specific control system and delay times are reduced to a minimum. Additionally, the transmission schedule can be used for a plurality of control cycles without further synchronisation of the network components.

Preferably, the devices are components of an industrial control system. Such industrial control systems have individual structure usually. With the new method efficient controlling may be realized in such systems.

The controlling should be compatible with a standard wired network, specifically the Ethernet standard. Thus, standard components and standard interfaces can be used.

Furthermore, the controlling may be implemented with digitally sampled closed loop feedback. Since the automatic acquisition of the specific transmission schedule includes uplink and downlink transmission, it is also possible to find a deterministic MAC for systems with closed loop feedback.

Moreover, the specific transmission schedule may include at least one wired delay period automatically determined for a connection between the controller and one of the devices. This means that not only on-air times but also wired delay periods are regarded when finding the specific transmission schedule.

The specific transmission schedule may further include an offset period reserved for a measurement run of one of the devices. This takes into account that a sensor measurement is performed at the beginning of each control cycle.

In one embodiment a transmission time slot for a first device having a sensor with an earlier sample instant than a sample instant of a sensor of a second device is provided earlier in the transmission schedule than a transmission time slot of the second device. This allows for performing the necessary measurements of all sensors in a minimum of time.

The transmission slots for uplink and downlink transmission may be provided without dead time from the beginning of the control cycle. This means that the time slots for transmission are made as early as possible so that the source data are available as soon as possible.

Furthermore, all bursts of each of the slaves may be transmitted immediately sequentially without any guard period subject to the condition that a transmission time slot for a first device having a sensor with an earlier sample instant than a sample instant of a sensor of a second device is provided earlier in the transmission schedule than a transmission time slot of the second device. This reduces guard periods to a minimum.

Additionally, between a time period during which the devices are controlled according to the specific transmission schedule and a time period during which the devices are controlled according another transmission schedule a guard period is provided for uplink only. This takes into account that wireless slaves may change and path attenuations tremendously affect the transmission from the slave to the master, whereas a downlink transmission is not affected to such extent due to the higher signal strength of the wireless master.

The above features mentioned in connection with the inventive method are also applicable to the inventive system.

The present invention will be explained in more detail in connection with the following figures, showing in:
- FIG 1 to FIG 7: examples of wired and wireless topologies;
- FIG 8 and FIG 9: mixed topologies.
- FIG 10: a generic control cycle;
- FIG 11: a single machine schedule;
- FIG 12: a two machine schedule; and
- FIG 13: a two machine topology.

The following embodiments show preferred examples of the present invention.

The main aspect of the present invention is a deterministic MAC suitable for the above requirements mentioned in the introductory part of the description. The proposed deterministic MAC combines the benefits of classic random access MAC in terms of flexibility to support a large variety of data transmission requirements and connectivities with the efficiency and fixed latencies of TDMA.

The principle of the deterministic MAC is to establish the transmit/receive structure during a setup phase following equipment deployment but prior to full operation. This structure can be determined automatically with considerable flexibility to meet all the bandwidth and timing constraints of the application. Following the setup phase, the structure is rigidly followed by all radio equipments with identical timings used in every transmission cycle (also called control cycle).

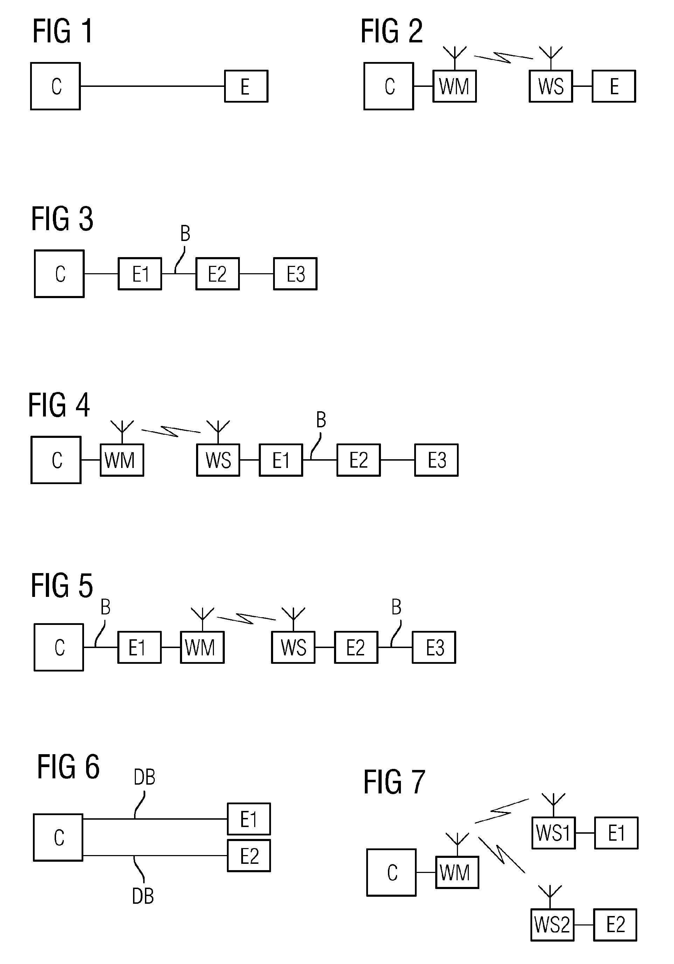

The preferred application of the deterministic MAC is wireless industrial control. Within this broad scope, a further preferred context is wireless industrial control that is fully compatible with wired industrial control. Typical wired industrial control networks use a "bus" architecture, usually based on an existing LAN architecture such as Ethernet. Thus equipments are controlled by a controller that is connected to them over a network that generally has a tree structure with the trunk beginning at the controller. This can be as simple as a single cable from the controller along which all controlled equipments are "daisy chained". Alternatively, multiple cables may emanate from the Controller. Furthermore, cables may branch at a controlled equipment. The preferred embodiment of the deterministic MAC is able to replace a variety of cables in a variety of topologies, limited only by the available wireless bandwidth. Various possible wired and wireless topologies are illustrated in FIGs 1 to 3. The examples in the figures illustrate several possible topologies but are by no means exhaustive.

FIG 1 shows the most simple wired case where a controller C is connected to a device or equipment E by wire. This example as well as the wired examples of FIGs 3, 6 and 8 are not claimed in the present document. They just serve for a better understanding.

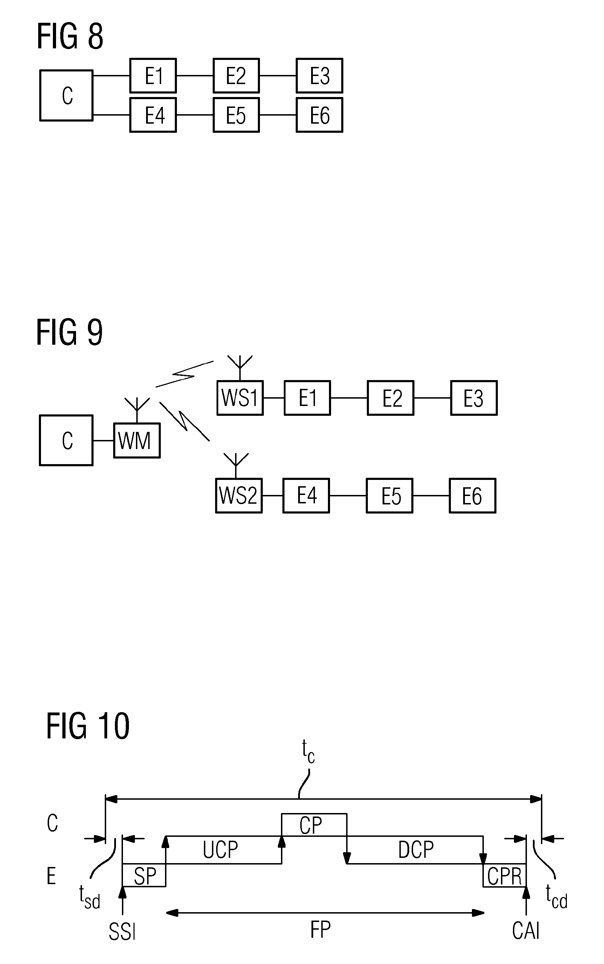

FIG 2 shows the wireless counterpart of FIG 1, where the controller C is connected to a wireless master WM by wire. The wireless master wirelessly communicates with a wireless slave WS which, in turn, is connected to device or equipment E. In all cases of FIGs 2 to 9, "WM" refers to the wireless master and "WS" refers to a wireless slave. The networks of FIGs 7 and 9 include two wireless slaves WS1 and WS2. Note that in all the topologies information is flowing both to and from the controller C and equipments E. The equipments are denoted as E and E1 to E6.

FIG 3 illustrates the case where more than one equipment is controlled using a single common bus B. The cable for any link along this bus B can be replaced by a wireless link as illustrated in FIG 4 and FIG 5. In the case of FIG 4 the wireless link must support traffic to and from equipments E1, E2 and E3. In the case of FIG 5, the wireless link must support traffic to and from only equipments E2 and E3. Therefore, it requires less bandwidth.

FIG 6 shows an example of a dual bus DB connecting controller C to equipments E1 and E2 in parallel. FIG 7 is the wireless counterpart of FIG 6, where wireless transmission is performed in parallel from wireless master WM to a first wireless slave WS1 and a second wireless slave WS2 which support equipment E1 and E2, respectively.

Mixtures of the topologies of FIG 3 and FIG 6 lead to the wired example of FIG 8. Similarly, a mixture of the topologies of FIGs 4 and 7 leads to the wireless example of FIG 9.

From the above, we see two fundamental forms of traffic multiplexing that are required within the deterministic MAC:
- wireless destination (Wireless Slave WS)
- wired destination (Equipment E).

Thus, the deterministic MAC manages the transmission of information to/from or more wireless slaves WS, each of which is connected to one or more controlled equipments E.

The deterministic MAC is also required to schedule transmission times to satisfy the timing constraints of industrial control. This industrial control is implemented as a digitally sampled closed loop feedback system. The feedback control loops are closed by the controller C. This provides the maximum flexibility of control parameters and interactions between the control of the individual machines. The control operation is elucidated as follows:
- All machines are controlled using a common regular control cycle in which sensor information passes from each machine (in the present document also called equipment or device) to the controller C and control information passes from the controller C to the machine E, usually one per control/transmission cycle.
- The sample instant for the sensors associated with every machine E are substantially identical in every cycle.
- Information from all sensors must reach the controller C before it is able to begin computing the feedback control values.
- The control update instants for the machines E are substantially identical to every cycle.

The transmit/receive cycle structure for each control/transmission cycle established by the deterministic MAC is arranged to be consistent with all of these requirements subject to feasibility based on bandwidth and processing constraints. The present invention covers an optimal strategy for assigning the transmit times for all data telegrams at all locations.

The generic requirements for control and communication of a particular machine/sensor are illustrated in FIG 10. The horizontal direction shows time over the period t_{c} of a single control cycle. The machine/sensor level M/S in FIG 10 shows the operations at the machine E (and/or E1 to E6) and its associated sensor. The sensor performs a measurement at the sensor sample instant SSI. This may be offset from the beginning of the cycle by a period t_{sd}, which can be positive or negative (i.e. the sensor sample instant SSI could occur towards the end of the previous cycle). Following the sensor sample measurement, there may be a period SP of processing the sensor measurement, although this period SP may have zero duration in some implementations. Next the sensor information must be communicated to the controller C over the available communications medium. If more than one sensor is associated with the machine, then the uplink communications period UCP completes when the last of these sensors has passed its information to the controller C. The controller C is then able to perform its processing to compute the control update values for the current cycle. At the end of this processing period CP, the control information is communicated back to the machine/sensor in the downlink communication periods DCP. This period DCP completes when the last of the control information has been communicated to the machine/sensor. This period DCP must complete in time for any necessary control preparation CPR to take place in the machines prior to the control application instant CAI, which is identical in all machines. This may be separated from the end of the current cycle by an offset t_{cd}, which might be positive or negative (i.e. the control application instant CAI could occur towards the beginning of the next cycle). The periods UCP, CP and DCP may be summarized as floating period FP.

Note that the cycle structure of FIG 10 may be an oversimplification in some cases. For example, there may be different types of sensors that have different sample instants. There may also be some components of control for which the cycle time is longer: an integer multiple of the normal cycle time.

For wireless communications in either direction, the total delay consists of four components:
- the sum of any remaining wired delay periods (optionally)
- the processing time in the transmitter to construct the air interface telegram
- the on-air time of the air interface telegram
- the processing time in the receiver to recover the data from the received air interface telegram.

The processing times are a function of the hardware used to implement the transmit and receive algorithms respectively. The algorithms in the deterministic MAC must take account of these times. For a known generation of hardware these values can be hard wired into the deterministic MAC algorithms.

The information necessary for performing the deterministic MAC setup can be acquired in a number of different ways:
- Input information via user interface. In this case, using a terminal, graphical user interface or other related device, the user specifies the topology in which and with which the wired link(s) must operate and the related equipment.
- Automatic information gathering. Here, the wireless master WM invites any wireless slaves WS that are tuned to its operating frequency to report to it their downstream topology and the necessary details of any connected devices E. This can be performed using a temporary random access protocol that is operational only during the first part of the setup phase.
- A hybrid of the above two options may also be implemented. In this case, some of the information is input directly by an operator into the user interface and some of the information is gathered automatically over the air interface.

Once the wireless master has acquired, by whatever means, all the necessary information, it runs an algorithm to derive the deterministic MAC transmission schedule. Generic attributes of the schedule that the algorithm will establish are provided below for the uplink communications period:
a) Transmission schedules for sensors with an earlier sample instant are earlier than transmission schedules for sensors with a later sample instant.
b) Transmission schedules are made as early as possible allowing for the availability of source data, the transmit processing time and the availability of the transmitter.
c) Subject to the clause a) as priority, all bursts from one wireless slave are transmitted sequentially without any guard period. This maximizes the efficiency of transmission by minimising the guard periods.
d) When a new schedule involves a change of wireless slave WS, a small guard period is inserted between the end of the previous schedule and the beginning of the new schedule. This allows recovery time in the wireless master WM receiver for the case when the signal received from the wireless slave WS in the previous schedule has significantly different strength from the signal of the wireless slave WS in the new schedule. This can arise due to differences in path attenuation from the two wireless slaves WS to the wireless master WM, for example, due to different operating ranges.

Attributes of the schedules for the downlink communications period are as follows:
a) Transmission schedules are made as early as possible allowing for the availability of source data, the transmit processing time and the availability of the transmitter.
b) No guard periods are required because the signal strength of the wireless master WM to the wireless slave WS remains constant over the downlink communications period DCP.

The sum of the uplink communication period UCP, the controller processing period CP and the downlink communications period DCP is designated as float period in FIG 10. The reason for this is that the controller processing period CP can "float" within this period to maximise the available wireless communications bandwidth. For example, if the telegrams required to communicate the sensor information to the controller C (i.e. the uplink telegrams) are larger than those required to communicate the control information to the machines E (i.e. the downlink telegrams), the controller processing period CP can float to the right to give more time for uplink communications - and vice versa as appropriate. Thus, provided the sum of the uplink communications period UCP and the downlink communications period DCP (determined according to the above rules) and the controller processing period CP is less than or equal to the available float period FP, the wireless topology is viable - otherwise not. For multiple machines the floating is independent from each machine.

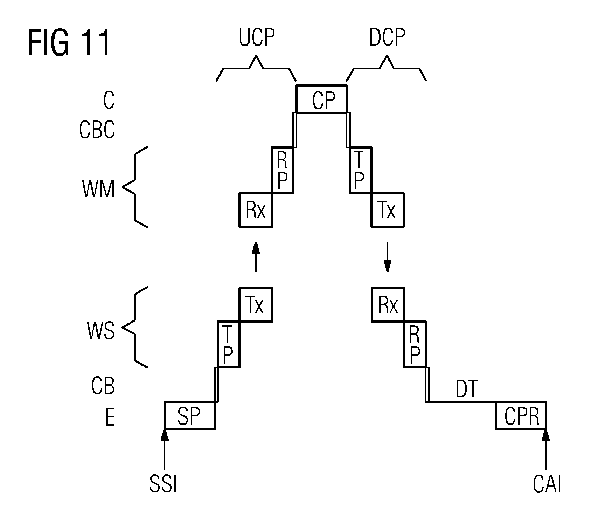

An example of a single machine schedule is illustrated in FIG 11. Beginning in the bottom left hand corner with the sensor sample instant SSI, after the sensor processing SP at the machine/sensor (i.e. equipment) level E, the processed sensor information passes over a cable CB (e.g. bus) to the wireless slave WS, taking a small amount of time (horizontal dimension in FIG 11). Next, transmit processing TP in the wireless slave WS constructs an air interface packet. This is then transmitted by the transmitter Tx of the wireless slave WS and appears in the receiver Rx of the wireless master WM. The wireless master receiver Rx then processes the air interface packet to obtain the sensor telegram information. This passes over a cable CBC from the wireless master WM to the controller C. At this point, the controller C processes the sensor telegram along with internal parameters and its current known state to generate a control signal during the controller processing period CP. When this is ready, it passes from the controller C over the cable CBC back to the wireless master WM. The wireless master WM then applies transmit processing TP to the control telegram to construct an air interface telegram that it transmits by its transmitter Tx. The transmitted air interface telegram also appears at the wireless slave receiver Rx. At the end of the reception of the air interface telegram, the wireless slave WS applies receive processing RP to recover the control telegram. This passes over the cable CB back to the machine M/S or E. There, it waits until the appropriate time to be prepared in a control preparation period CPR and applied at a control application instant CAI.

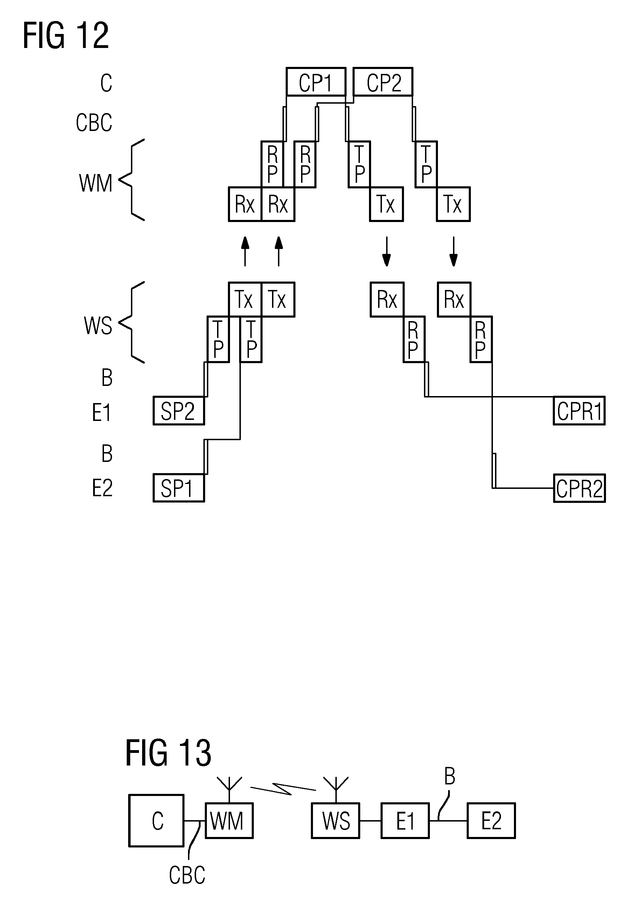

Note that the schedule shows some "dead" time DT towards the end of the cycle. The schedule could have been constructed with this dead time DT at any point without altering the functionality obtained. In fact, this dead time is available for the control of one or more additional machines, or else for more complex control of the existing machine. An example of controlling two machines is provided in FIG 12. The corresponding topology is as FIG 13. The controller C is connected via cable CBC (e.g. bus) to wireless master WM. The wireless master WM wirelessly communicates with wireless slave WS. The wireless slave WS communicates over bus B with equipment E1 and E2, both implemented as machine/sensor.

The operations are essentially as for FIG 11 except that two machines E1 and E2 are controlled. Issues of note are:
- Because machine/sensor E2 shares a bus B with machine/sensor E1, the sensor telegram for machine/sensor E2 must wait until after the sensor of machine/sensor E1 has been transmitted to the wireless slave WS before its own transmission to the wireless slave WS.
- Because the machines/sensors use a common wireless slave WS, the transmission for machine/sensor E2 can follow immediately after the transmission for machine/sensor E1.
- It is assumed that the controller C can only control one machine at a time. Because of this, the start of processing to generate the control telegram for machine/sensor E2 must wait until completion of processing to generate the control telegram for machine/sensor E1, even though the sensor telegram from machine/sensor E2 is available earlier than this time. Because of this, it is not possible for the wireless master transmission of the control telegram for machine/sensor E2 to follow immediately after its transmission of the control telegram for machine/sensor E1. This wastes some of the available wireless communication time. If the controller C is able to control more than one machine at a time, then the control processing periods CP1 and CP2 can overlap and there need be no gap between the downlink transmissions.

It is clear from the above how the control processing times "float" according to the availability of the information.

In the above, only cyclic messages have been considered. Frequently, for wireless industrial control systems there is also a requirement to support the acyclic transmission of information, such as supervisory and warning information. For a wireless system this must also be transmitted over the air. Because the acyclic data is not time critical, its transmission schedules can be slotted into any available time positions, once the cyclic schedule has been established. For example, there are significant periods in FIG 12 during which no transmissions are being made.

One of the key benefits of the deterministic MAC is the fact that all transmissions are regular and that therefore it is not necessary to embed time-synchronisation symbols in those transmissions. This is advantageous both in terms of bandwidth (reduced overheads) and latency. Nevertheless, it is still necessary to maintain fine time synchronisation in the long term. While this can be achieved using embedded pilots, the requirements for extreme reliability suggest it would be beneficial if an additional synchronisation capability was provided. This can be achieved by including a short sync word at an available position in the schedule. This will be transmitted by the wireless master WM. This will allow the wireless slave(s) WS to maintain synchronisation. Given that they are informed of their place in the schedule by the wireless master WM, they can then time their transmissions relative to the sync word. This means that the signals from the wireless slave(s) WS always arrive at the wireless master WM at known times, making synchronisation unnecessary there.

The proposed deterministic MAC according to the present invention has the following benefits:
- Overheads associated with any random scheduling (such as might be applied in a protocol such as Carrier Sense Multiple Access (CSMA)) are removed.
- Transmission delays are non-varying.
- Overheads for receiver synchronisation are significantly reduced because the signal arrival time is predictable from each cycle to the next.
- The structure of the cycle can be highly optimised offline to maximise throughput and/or topological flexibility and to minimise latency.
- If the requested combination of equipment topology and cycle time cannot be accommodated, the system can report this to the user at system setup and alternative configurations explored.

## Claims

1. Method of controlling a plurality of devices (E) by a controller (C), each of the devices (E) being connected to a slave (WS) of a wireless network and the controller (C) being connected to a master (WM) of the wireless network, including the steps of
- specifying the topology of the network including the devices (E) and the controller (C) connected thereto,
- automatically determining for both uplink and downlink of each slave-master pair of the wireless network:
o a processing time (TP) to construct an air interface telegram for transmission,
o an on-air time of the air interface telegram and
o a processing time (RP) to recover data from a received air interface telegram,
- acquiring a specific transmission schedule of a control cycle on the basis of the determined time values and
- controlling of the devices (E) by the master (WM) using said specific transmission schedule.

2. Method according to claim 1, wherein the devices (E) are components of an industrial control system.

3. Method according to claim 1 or 2, wherein the controlling is compatible with a standard wired network, specifically the Ethernet standard.

4. Method according to one of the preceding claims, wherein the controlling is implemented with digitally sampled closed loop feedback.

5. Method according to one of the preceding claims, wherein the specific transmission schedule includes at least one wired delay period automatically determined for a connection between the controller (C) and one of the devices (E).

6. Method according to one of the preceding claims, wherein the specific transmission schedule includes an offset period (t_{cd}) reserved for a measurement run of one of the devices (E).

7. Method according to one of the preceding claims, wherein a transmission time slot for a first device (E) having a sensor with an earlier sample instant (SSI) than a sample instant (SSI) of a sensor of a second device (E) is provided earlier in the transmission schedule than a transmission time slot of the second device (E).

8. Method according to one of the preceding claims, wherein transmission slots for uplink and downlink transmission are provided without dead time (DT) from the beginning of the control cycle.

9. Method according to one of the preceding claims, wherein all bursts of each of the slaves (WS) are transmitted immediately sequentially without any guard period subject to the condition of claim 7.

10. Method according to one of the preceding claims, wherein between a time period during which the devices (E) are controlled according to the specific transmission schedule and a time period during which the devices (E) are controlled according to another transmission schedule a guard period is provided for uplink only.

11. System including
- a controller (C),
- a plurality of devices (E) controlled by the controller (C) and
- a wireless network, each of the devices (E) being connected to a slave (WS) of the wireless network and the controller (C) being connected to a master (WM) of the wireless network, wherein
- the controller (C) is adapted for:
o specifying the topology of the network including the devices (E) and the controller (C) connected thereto,
o automatically determining for both uplink and downlink of each slave-master (WS, WM) pair of the wireless network:
■ a processing time (TP) to construct an air interface telegram for transmission,
■ an on-air time of the air interface telegram and
■ a processing time (RP) to recover data from a received air interface telegram,
o acquiring a specific transmission schedule of a control cycle on the basis of the determined time values and
o controlling of the devices (E) by the master (WM) using said specific transmission schedule.
